# FASCICULE DE BREVET EUROPEEN

(11) **EP 0 761 515 B1**
(45) Date de publication et mention de la délivrance du brevet: **05.04.2000**
(21) Numéro de dépôt: 96114543.0
(22) Date de dépôt: 11.09.1996
(51) Int. Cl.: B60R 25/04

(54) **Système d'antivol électrique, pour un véhicule automobile**
Diebstahlschutzsystem für ein Kraftfahrzeug
Electrical anti-theft system for a motor vehicle

(30) Priorité: 12.09.1995 FR 9510743
(43) Date de publication de la demande: 12.03.1997
(73) Titulaire: VALEO SECURITE HABITACLE, 94000 Créteil (FR)
(72) Inventeur: Peyre, Jean, 78800 Houilles (FR); Demouy, Olivier, 94300 Vincennes (FR); Humbert, Arnaud, 94500 Champigny sur Marne (FR)

(56) Documents cités:
- EP-A- 0 185 238
- EP-A- 0 646 506
- DE-A- 4 019 478
- US-A- 4 223 927
- US-A- 4 621 223
- PATENT ABSTRACTS OF JAPAN vol. 009, no. 057 (M-363), 13 Mars 1985 & JP-A-59 192642 (KOKUSAN KINZOKU KOGYO KK), 1 Novembre 1984,
- PATENT ABSTRACTS OF JAPAN vol. 008, no. 100 (M-295), 11 Mai 1984 & JP-A-59 014562 (KOKUSAN KINZOKU KOGYO KK), 25 Janvier 1984,

## Description

La présente invention concerne un antivol électrique notamment pour un véhicule automobile.

Il a déjà été proposé des dispositifs permettant de verrouiller à distance, et donc sans contact, ni électrique, ni mécanique, les ouvrants d'un objet et notamment d'un véhicule automobile. En particulier, on a développé des techniques d'accès sans clef qui permettent d'accéder à des ressources sans avoir à sortir une clef mécanique, ou équivalente, d'autorisation de l'accès.

Un tel système est très attractif par le confort qu'il apporte à l'usager et par les possibilités de gestion des accès par des moyens informatiques qu'il permet.

Dans l'application au verrouillage et au déverrouillage d'ouvrants, comme ceux d'un véhicule automobile, ou d'un antivol de sécurité comme celui d'une colonne de direction, ou de l'arbre de sortie de la boîte de vitesses d'un véhicule, on a dans cet optique proposé des systèmes mécaniques utilisant des organes moteurs de type électrique tels qu'un moteur électrique tournant ou un électroaimant.

Quand le système de gestion des accès reconnaît un droit d'accès et une demande d'accès, un organe de commande produit un ordre d'actionnement qui excite l'organe moteur électrique. L'antivol et/ou le verrou change d'état en passant de l'état verrouillé à l'état déverrouillé.

Une séquence analogue inverse se produit pour la sortie et/ou l'activation de l'antivol.

Selon une conception connue, décrite et représentée dans le document FR-A-2.710.599, il a déjà été proposé un procédé de contrôle d'un antivol de véhicule automobile, notamment avec système d'accès par commande à distance, faisant notamment appel à un commutateur de commande de démarrage et d'alimentation électrique des accessoires du véhicule et du circuit d'allumage du moteur du véhicule.

Selon le procédé, dans une phase de désactivation de l'antivol, on accède au véhicule, par exemple avec une télécommande, on manoeuvre un commutateur qui reproduit en la simulant la manipulation des clefs mécaniques habituelles, on détecte une position déterminée du commutateur pour produire une interrogation d'identification de la demande de déverrouillage de l'antivol, on produit une réponse un ordre d'activation de positions successives du commutateur et un ordre de déverrouillage de l'antivol.

Dans une phase d'activation de l'antivol, on détecte une manoeuvre d'activation de l'antivol sur le commutateur, cette manoeuvre reproduisant les manipulations habituelles des clefs mécaniques, on active l'antivol, on désactive les positions successives du commutateur.

Pour la mise en place d'un tel procédé, il est fait appel à un système d'antivol du type comportant :
- un commutateur d'antivol pour la commande du démarrage du moteur du véhicule et de l'alimentation de différents circuits électriques du véhicule ;
- un antivol motorisé comportant un moteur électrique d'entraînement d'un organe de blocage entre une position verrouillée et une position déverrouillée, par inversion des polarités des bornes d'alimentation du moteur, par exemple à travers un bloc d'alimentation électrique du moteur ;
- et du type dans lequel le commutateur d'antivol comporte :
- un interrupteur de clef pour détecter la simulation de l'introduction d'une clef dans le commutateur d'antivol ; et
- un interrupteur de commande à positions multiples pour commander en séquence l'alimentation de plusieurs circuits électriques du véhicule et du démarreur, comportant un contact mobile de commande relié à une polarité d'une source d'alimentation électrique, et une série de contacts fixes avec lesquels le contact mobile de commande entre successivement en contact lors de la manoeuvre du commutateur en vue de provoquer le démarrage du véhicule.

Dans la conception décrite et représentée dans ce document, le système d'antivol comporte également une centrale d'antivol connectée aux éléments précédents pour mettre en oeuvre un procédé de contrôle de l'antivol. La centrale d'antivol comporte notamment un microprocesseur qui assure la gestion du procédé de contrôle de l'antivol.

La présente invention a pour but de proposer une nouvelle conception d'un système d'antivol électrique du type mentionné précédemment, qui assure toutes les fonctions souhaitées, avec la fiabilité requise, mais sans qu'il soit nécessaire de faire appel à une centrale d'antivol réalisée sous la forme d'un microprocesseur, c'est-à-dire une conception dans laquelle la logique de commande du verrouillage et du déverrouillage de l'antivol est réalisée sous la forme d'une logique câblée et protégée.

Dans ce but, l'invention propose un système d'antivol électrique du type mentionné précédemment, caractérisé en ce que le moteur électrique de l'antivol motorisé comporte :
- une première borne d'alimentation qui est reliée à une première polarité de la source d'alimentation à travers l'interrupteur de clef et en l'absence de clef, ou qui est reliée à la seconde polarité de la source d'alimentation à travers l'interrupteur de clef, en présence de clef, et à travers des moyens de détection de l'état de l'antivol, lorsque l'antivol n'est pas en position déverrouillée ;
- et une seconde borne d'alimentation qui est reliée à la première polarité de la source d'alimentation à travers l'interrupteur de clef et en présence de clef, ou en l'absence de clef et à travers lesdits moyens de détection de l'état de l'antivol lorsque l'antivol est en position verrouillée, ou qui est reliée à la seconde polarité de la source d'alimentation à travers l'interrupteur de clef, en l'absence de clef, et à travers lesdits moyens de détection de l'état de l'antivol lorsque l'antivol n'est pas en position verrouillée.

Selon d'autres caractéristiques de l'invention :
- l'interrupteur de clef comporte une paire de contacts mobiles montés mobiles simultanément entre une première position correspondante à l'absence de clef et une seconde position correspondant à la présence de clef, parmi lesquels :
- un premier contact mobile est relié à la première borne d'alimentation du moteur et est susceptible de coopérer, en l'absence de clef, avec un contact fixe relié en permanence à la première polarité de la source d'alimentation et, en présence de clef, est susceptible de coopérer avec un premier plot de sortie des moyens de détection de l'état de l'antivol qui est relié à la seconde polarité de la source d'alimentation lorsque l'antivol n'est pas en position déverrouillée ;
- et un second contact mobile est relié à la seconde borne d'alimentation du moteur et est susceptible de coopérer, en présence de clef, avec un contact fixe relié en permanence à la première polarité de la source d'alimentation et, en l'absence de clef, est susceptible de coopérer avec un second plot de sortie des moyens de détection de l'état de l'antivol qui est relié à la seconde polarité de la source d'alimentation lorsque l'antivol n'est pas en position verrouillée ;
- les moyens de détection de l'état de l'antivol comportent :
- un interrupteur de détection du déverrouillage de l'antivol qui comporte un contact mobile relié au premier plot de sortie et qui est susceptible de coopérer avec un premier contact fixe relié à la seconde polarité de la source d'alimentation lorsque l'antivol n'est pas en position déverrouillée, et est susceptible de coopérer avec un contact fixe relié à la seconde borne d'alimentation du moteur lorsque l'antivol est en position déverrouillée ;
- et un interrupteur de détection du déverrouillage de l'antivol qui comporte un contact mobile relié audit second plot de sortie et qui est susceptible de coopérer avec un premier contact fixe relié à la seconde polarité de la source d'alimentation lorsque l'antivol n'est pas en position verrouillée, et qui est susceptible de coopérer avec un second contact fixe relié à la première borne d'alimentation du moteur lorsque l'antivol est en position verrouillée ;
- les premiers contacts fixes des interrupteurs de détection du déverrouillage et du verrouillage de l'antivol sont des pistes conductrices, et les contacts mobiles associés des moyens de détection de l'état de l'antivol sont liés en rotation à l'arbre de sortie du moteur de l'antivol ;
- l'un au moins des contacts fixes de l'interrupteur de commande à positions multiples du commutateur d'antivol est relié au circuit électrique associé du véhicule par un dispositif d'inhibition qui n'établit l'alimentation électrique de ce circuit que lorsque l'antivol est en position déverrouillée ;
- le dispositif d'inhibition est un interrupteur d'inhibition dont le contact mobile est relié audit contact fixe de l'interrupteur de commande et coopère avec un plot fixe relié audit circuit électrique lorsque l'antivol est en position déverrouillée ;
- le contact mobile de commande de l'interrupteur de commande à positions multiples du commutateur d'antivol est relié à une polarité de la source d'alimentation par un dispositif d'inhibition qui n'établit la liaison électrique que lorsque l'antivol est en position déverrouillée ;
- le dispositif d'inhibition est un interrupteur d'inhibition dont le contact mobile est relié à une polarité de la source d'alimentation et coopère avec un plot fixe relié au contact mobile de commande lorsque l'antivol est en position déverrouillée ;
- le contact mobile de l'interrupteur d'inhibition est lié en rotation au moteur de l'antivol motorisé ;
- le commutateur d'antivol est un commutateur rotatif.

D'autres caractéristiques et avantages de l'invention apparaîtront à la lecture de la description détaillée qui va suivre pour la compréhension de laquelle on se reportera aux dessins annexés dans lesquels :
- La figure 1 est un schéma illustrant un principe de réalisation d'un antivol selon l'état de la technique comportant notamment une centrale électronique d'antivol ;
- la figure 2 est un schéma qui illustre un premier mode de réalisation d'un antivol selon l'invention sur lequel l'antivol électrique est représenté à l'état verrouillé ;
- la figure 3 est un schéma similaire à celui de la figure 2 sur lequel l'antivol électrique est à l'état verrouillé, mais après la simulation de l'introduction d'une clef ;
- la figure 4 est un schéma similaire à celui de la figure 3 sur lequel l'antivol électrique est en train de passer de l'état verrouillé à l'état déverrouillé ;
- la figure 5 est un schéma similaire à celui de la figure 4 sur lequel l'antivol électrique est représenté à l'état déverrouillé ;
- la figure 6 est un schéma similaire à celui de la figure 5 sur lequel l'antivol électrique est représenté à l'état déverrouillé après simulation du retrait d'une clef ;
- la figure 7 est un schéma similaire à celui de la figure 6 sur lequel l'antivol passe de l'état déverrouillé à l'état verrouillé ; et
- les figures 8 à 13 sont des schémas similaires à ceux des figures 2 à 7 qui illustrent un second mode de réalisation d'un antivol conforme aux enseignements de l'invention.

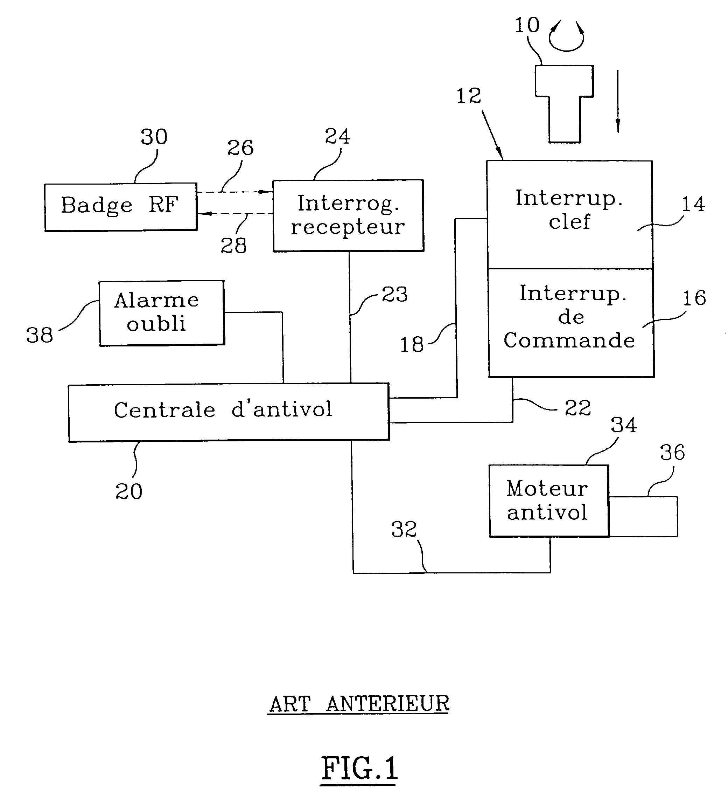

L'antivol selon l'état de la technique schématisé à la figure 1 comporte une clef 10, ou une fausse clef, qui est destinée à venir s'introduire dans le canon, ou un faux canon, d'un commutateur d'antivol 12.

Le commutateur est prévu pour équiper le tableau de bord du véhicule et sa conception est de type sensiblement proche de celle du commutateur de démarrage d'un véhicule selon l'état de la technique.

L'utilisateur manoeuvre la clef de contact 10.

La clef de contact 10 est en fait une fausse clef en ce qu'elle n'agit pas nécessairement sur une serrure mécanique, bien qu'une telle clef réelle, associée à une serrure mécanique, apporte un degré supplémentaire de sécurité en ajoutant un moyen de verrouillage ou de déverrouillage en chaîne avec la conception générale d'un antivol électrique.

Le commutateur d'antivol 12 comporte un interrupteur de clef 14 qui est destiné à détecter l'absence de la clef 10 ou la présence en position introduite de cette dernière.

Le commutateur 12 comporte également un interrupteur de commande à positions multiples 16 pour la commande du démarrage du moteur du véhicule et pour la commande de l'alimentation de différents circuits électriques du véhicule tels que notamment le circuit d'allumage du moteur.

L'interrupteur de clef 14 est relié par une ligne 18 à une entrée d'une centrale d'antivol 20, tandis que l'interrupteur de commande 16 est relié par une ligne 22 à une autre entrée de la centrale d'antivol 20.

La centrale d'antivol 20 comporte un circuit d'analyse qui est notamment capable de lire les positions qu'occupent les interrupteurs 14 et 16 du commutateur 12.

La centrale d'antivol selon l'état de la technique comporte par exemple un microcontrôleur tel qu'un circuit INTEL 8051. Ce circuit contient un programme de lecture des ports d'entrée pour informer la centrale d'antivol des positions des différents interrupteurs du commutateur 12.

Selon une conception connue, et par une autre entrée et une ligne 23, la centrale d'antivol peut échanger des signaux avec une station d'interrogation et de réception 24 qui échange par des lignes 26, 28 des signaux avec, par exemple, un badge 30 d'accès sans clef au véhicule.

En fonction des échanges avec la centrale d'antivol 20, celle-ci produit sur une liaison 32 un signal de commande de la mise en marche, dans l'un ou l'autre sens, d'un moteur d'antivol 34 qui agit sur un organe 36 de blocage de l'organe mécanique de la colonne de direction du véhicule, ou de l'arbre de sortie de la boîte de vitesses.

Par ailleurs, si l'utilisateur oublie le badge radiofréquence 30 à l'intérieur du véhicule, ou s'il omet de manoeuvrer la clef 10 pour mettre en oeuvre une séquence d'activation de l'antivol alors qu'il laisse son badge dans le véhicule, la centrale d'antivol 20 produit l'activation d'un moyen d'alarme d'oubli 38.

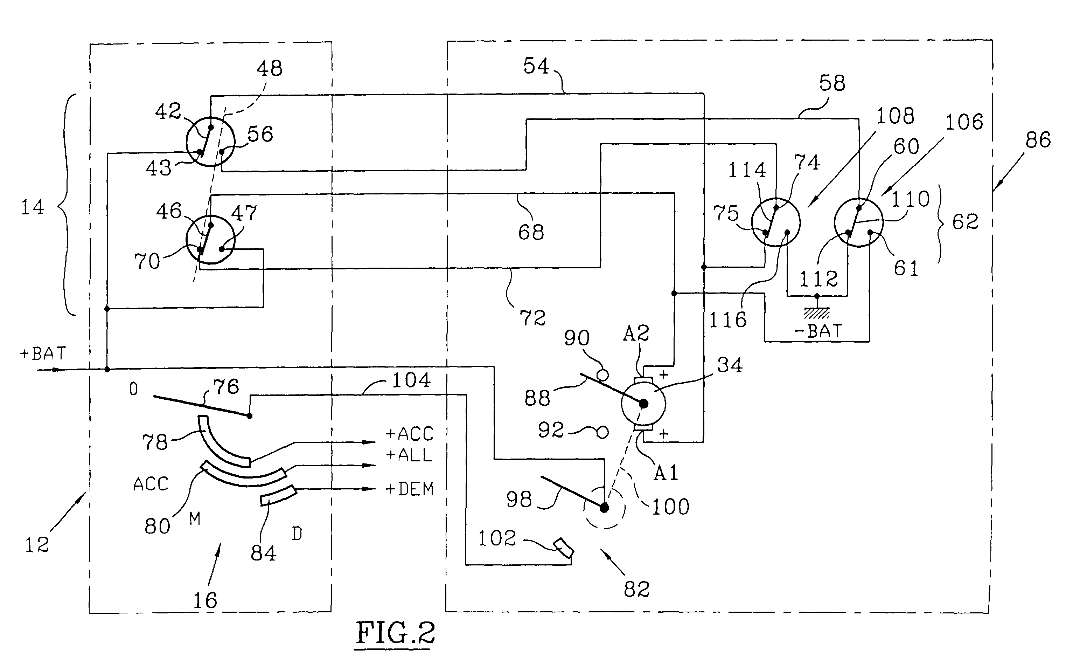

On décrira maintenant un premier mode de réalisation d'un antivol électrique selon l'invention en se reportant au schéma de la figure 2 sur laquelle des composants identiques ou similaires à ceux de la figure 1 sont désignés par les mêmes chiffres de référence.

Conformément au principe de l'antivol électrique selon l'invention, les moyens de commande de la commutation de l'antivol électrique motorisé sont réalisés selon une logique câblée et protégée sans faire appel à une centrale d'antivol selon l'état de la technique.

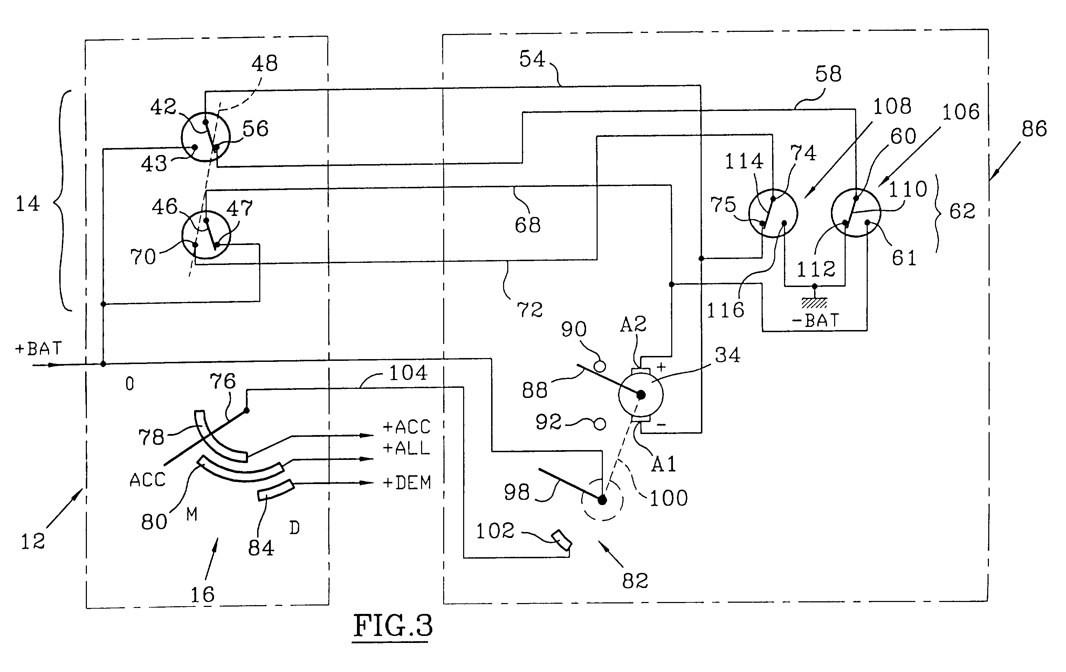

A cet effet, l'interrupteur de clef 14 est constitué par deux commutateurs comportant chacun un contact mobile 42, 46 et qui sont reliés mécaniquement entre eux par une liaison représentée symboliquement par la ligne en pointillés 48 de manière à se déplacer tous les deux simultanément entre une première position illustrée à la figure 2 correspondant à l'absence de clef dans l'interrupteur de clef 14, et une seconde position, illustrée par exemple à la figure 3, correspondant à la présence d'une clef dans l'interrupteur de clef 14.

Le contact mobile 42 du premier commutateur est relié en permanence à une première borne A1 d'alimentation électrique du moteur 34 de l'antivol motorisé.

En l'absence de clef, le contact mobile 42 coopère avec un premier contact fixe 43 qui est relié en permanence à une première polarité +BAT de la batterie d'accumulateurs du véhicule.

Le premier contact fixe 43 est également relié en permanence à un second contact fixe 47 du second commutateur.

En présence d'une clef dans l'interrupteur de clef 14 et comme cela est notamment illustré à la figure 3, le premier contact mobile 42 coopère avec un second contact fixe 56 qui est relié en permanence, par une ligne 58, à un premier plot fixe 60 de sortie de moyens 62 de détection de l'état de l'antivol.

Le contact mobile 46 du second commutateur est relié en permanence à la seconde borne A2 d'alimentation électrique du moteur 34.

En l'absence de clef, et comme on peut le voir sur la figure 2, le contact mobile 46 coopère avec un premier contact fixe 70 qui est relié en permanence, par une ligne 72, à un second plot fixe de sortie 74 appartenant aux moyens 62 de détection de l'état de l'antivol.

En présence de clef, et comme on peut le voir notamment sur la figure 3, le contact mobile 46 coopère avec le second contact fixe 47 qui est relié en permanence à la première polarité +BAT de la batterie d'accumulateurs du véhicule ainsi qu'au contact fixe 43 avec lequel coopère le contact mobile 42 en l'absence de clef.

Dans le mode de réalisation illustré sur les figures, l'interrupteur de commande à positions multiples 16 est un interrupteur du type rotatif qui comporte un contact mobile de commande 76 qui est relié à la borne +BAT de la batterie du véhicule par l'intermédiaire d'un dispositif d'inhibition 82.

Le contact mobile de commande 76 est susceptible d'occuper successivement plusieurs positions décalées angulairement les unes par rapport aux autres et qui sont repérées "O", "ACC", "M" et "D" sur les figures.

Dans ces positions successives d'arrêt, d'alimentation d'accessoires électriques, de marche, et de démarrage, le contact mobile rotatif de commande 76 est susceptible de coopérer avec une ou plusieurs pistes conductrices agencées en arc de cercle constituant les contacts fixes de l'interrupteur de commande à positions multiples 16.

Lorsque le contact mobile 76 est dans sa position d'arrêt illustrée sur la figure 2, position "O", il ne coopère avec aucun contact fixe.

Lorsque le contact mobile de commande 76 est dans sa position "ACC", il coopère avec une piste fixe 78 qui est reliée électriquement au circuit +ACC d'alimentation des accessoires du véhicule.

Lorsque l'organe mobile de commande 76 est dans sa position de marche "M", il est simultanément en contact avec la piste 78 et avec une piste conductrice 80 qui est reliée électriquement au circuit +ALL d'allumage du moteur du véhicule.

Lorsque le contact mobile de commande 76 est dans la position "D", il est en contact simultanément avec la piste 80 et avec une piste conductrice 84 qui est reliée au circuit +DEM d'alimentation électrique du démarreur qui équipe le moteur à combustion du véhicule.

L'introduction d'une clef de commande dans le commutateur 12, ou toute autre action simulant une telle introduction de clef, a pour effet, dans un premier temps, de provoquer un changement d'état de l'interrupteur de clef 14 puis, sous l'action du conducteur, de provoquer un changement de position du contact mobile de commande 76 appartenant à l'interrupteur de commande à positions multiples 16.

On décrira maintenant plus en détail le module de blocage 86 entouré par une ligne en traits pointillés à la partie droite de la figure 2.

Le module de blocage 86 comporte l'antivol motorisé avec son moteur 34, les moyens 62 de détection de l'état verrouillé ou déverrouillé de l'antivol et le dispositif d'inhibition 82.

Le moteur 34 est un moteur à inversion de sens, par inversion des polarités d'alimentation à ses bornes d'alimentation A1 et A2.

L'arbre de sortie du moteur 34 peut ainsi tourner dans l'un ou l'autre sens entre une position verrouillée et une position de déverrouillage de l'antivol.

On a représenté de manière schématique sur la figure 2 un élément mobile 88 qui est lié en rotation avec l'arbre de sortie du moteur 34 et qui est susceptible de venir coopérer avec une butée mécanique de verrouillage 90 ou avec une butée mécanique de déverrouillage 92.

Les moyens 62 de détection de l'état de l'antivol sont, dans le premier mode de réalisation illustré aux figures 2 à 7, constitués par un interrupteur 106 de détection du déverrouillage de l'antivol et par un interrupteur 108 de détection du verrouillage de l'antivol.

L'interrupteur 106 comporte un contact mobile 110 qui est relié au premier plot fixe de sortie 60 et qui, lorsque l'antivol n'est pas en position déverrouillée, coopère avec un contact fixe 112 relié à la seconde polarité -BAT de la batterie du véhicule.

Lorsque l'antivol est en position déverrouillée, le contact mobile 110 coopère avec un plot fixe 61 qui est relié électriquement en permanence au second contact mobile 46 de l'interrupteur de clef 14 ainsi qu'à la seconde borne A2 d'alimentation du moteur électrique 34.

L'interrupteur de détection du verrouillage 108 comporte un contact mobile 114 qui est relié au second plot fixe de sortie 74 et qui, lorsque l'antivol n'est pas dans son état verrouillé illustré à la figure 2, est susceptible de coopérer avec un contact fixe 116 relié en permanence à la polarité -BAT.

Le dispositif d'inhibition 82 est constitué par un commutateur rotatif qui comporte un contact mobile 98 qui est lié en rotation à l'arbre de sortie du moteur 34, la liaison mécanique étant schématisée par une ligne en pointillés 100.

Le contact mobile d'inhibition 98 est susceptible de coopérer avec un plot fixe 102 réalisé sous la forme d'une piste conductrice, uniquement lorsque l'antivol est en position déverrouillée.

Le plot fixe 102 est relié au contact mobile 76 par une ligne 104, ce dernier n'étant ainsi relié à la première polarité +BAT que lorsque l'antivol est en position déverrouillée.

Du point de vue fonctionnel, le dispositif d'inhibition 82 est ainsi disposé en amont de l'interrupteur de commande à positions multiples 16.

On décrira le mode de fonctionnement de l'antivol électrique illustré aux figures 2 à 7.

Lorsque l'antivol est dans son état verrouillé illustré à la figure 2, le contact mobile 114 coopère avec un plot fixe 75 qui est relié électriquement en permanence au premier contact mobile 42 de l'interrupteur de clef 14 et à la première borne A1 d'alimentation du moteur électrique 34.

Dans l'état verrouillé et en l'absence de clef illustré à la figure 2, la première borne A1 d'alimentation du moteur 34 est reliée par une ligne 54 à la polarité +BAT de la batterie du véhicule, à travers le premier contact mobile 42 de l'interrupteur de clef 14, tandis que sa seconde borne A2 d'alimentation est aussi reliée par une ligne 68 à la polarité +BAT à travers le second contact mobile 46 de l'interrupteur de clef 14 et à travers l'interrupteur de détection du verrouillage 108.

Le moteur 34 est donc à l'arrêt en court-circuit.

Parallèlement, le contact mobile de commande 76 n'est pas relié à la polarité +BAT.

Lorsque le conducteur introduit une clef, et comme cela est illustré sur la figure 3, il provoque le changement d'état de l'interrupteur de clef 14 ce qui a pour effet de relier la première borne A1 d'alimentation du moteur 34 à la polarité -BAT par l'intermédiaire du premier contact mobile 42 de l'interrupteur de clef 14 qui la relie, par le plot 56 et la ligne 58, au contact mobile 110 de l'interrupteur de détection du déverrouillage 106 qui coopère avec le plot fixe 112 relié à la seconde polarité -BAT.

Le moteur 34 est donc alimenté et il commence sa rotation dans le sens antihoraire en considérant la figure 3.

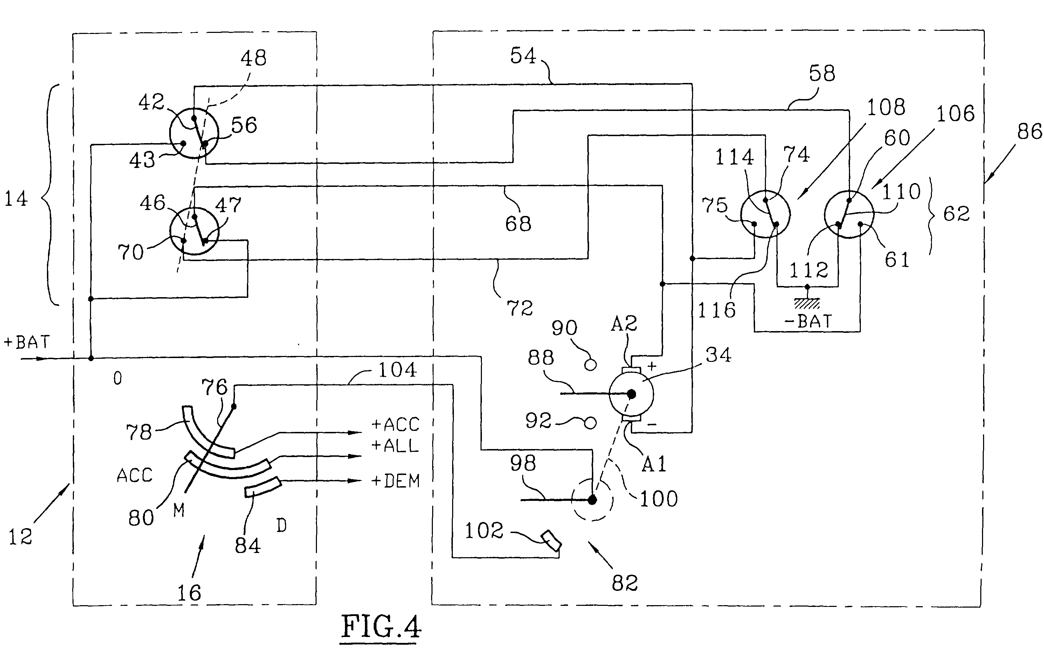

Dans la position intermédiaire entre l'état verrouillé et l'état déverrouillé illustrée sur la figure 4, l'interrupteur de détection du verrouillage 108 a changé d'état et son contact mobile 114 coopère avec le contact fixe 116.

Le raccordement du contact mobile de commande 76 est toujours inhibé par le dispositif d'inhibition 82 et la rotation du moteur 34 se poursuit en direction de la position de déverrouillage de l'antivol.

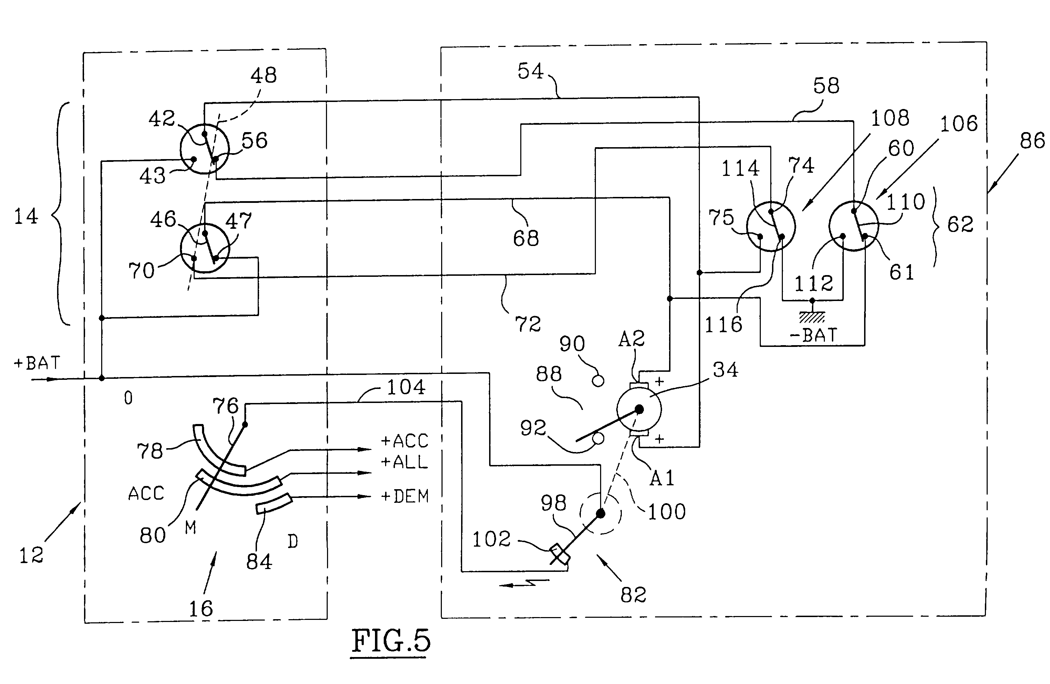

Lorsque cette position de déverrouillage est atteinte, et comme cela est illustré sur la figure 5, l'interrupteur de détection du déverrouillage 106 change d'état et son contact mobile 110 n'est plus en contact avec le contact fixe 112.

Dans cette position déverrouillée, la première borne A1 d'alimentation du moteur 34 est reliée à la polarité +BAT de la batterie du véhicule à travers le premier contact mobile 42 de l'interrupteur de clef 14 et à travers le contact mobile 110 de l'interrupteur de détection du déverrouillage 106 et enfin à travers le second contact mobile 46 de l'interrupteur de clef 14.

Ainsi, les deux bornes d'alimentation A1 et A2 du moteur 34 sont reliées à la même polarité +BAT de la batterie du véhicule et le moteur s'arrête en court-circuit.

Simultanément, le contact mobile d'inhibition 98 est en contact avec le plot fixe 102 et le contact mobile 76 est relié à la polarité +BAT de la batterie du véhicule, permettant le raccordement des différents circuits électriques du véhicule à cette polarité +BAT en fonction de la position angulaire occupée par le contact mobile de commande 76 de l'interrupteur à positions multiples de commande 16.

Lorsque le conducteur désire à nouveau provoquer un verrouillage de l'antivol, il retire la clef de l'interrupteur 14 qui provoque le changement d'état simultané des deux contacts mobiles 42 et 46.

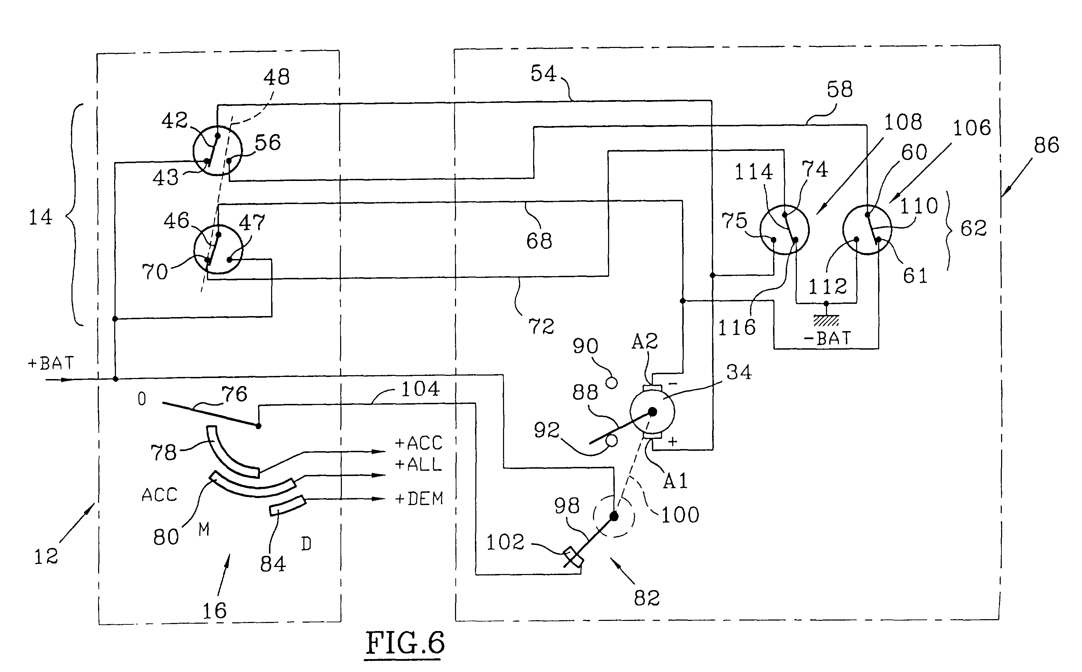

Dans cette position illustrée sur la figure 6, la première borne A1 d'alimentation du moteur 34 est alors reliée à la polarité +BAT de la batterie du véhicule, à travers le premier contact mobile 42 de l'interrupteur de clef 14, tandis que la seconde borne A2 d'alimentation du moteur 34 est reliée à la polarité -BAT par le second contact mobile 46 de l'interrupteur de clef 14 et l'interrupteur 108 de détection du verrouillage.

Le moteur 34 est ainsi alimenté et il commence à tourner, dans le sens horaire en considérant la figure 6, pour quitter sa position de déverrouillage et retourner vers sa position de verrouillage illustrée à la figure 2.

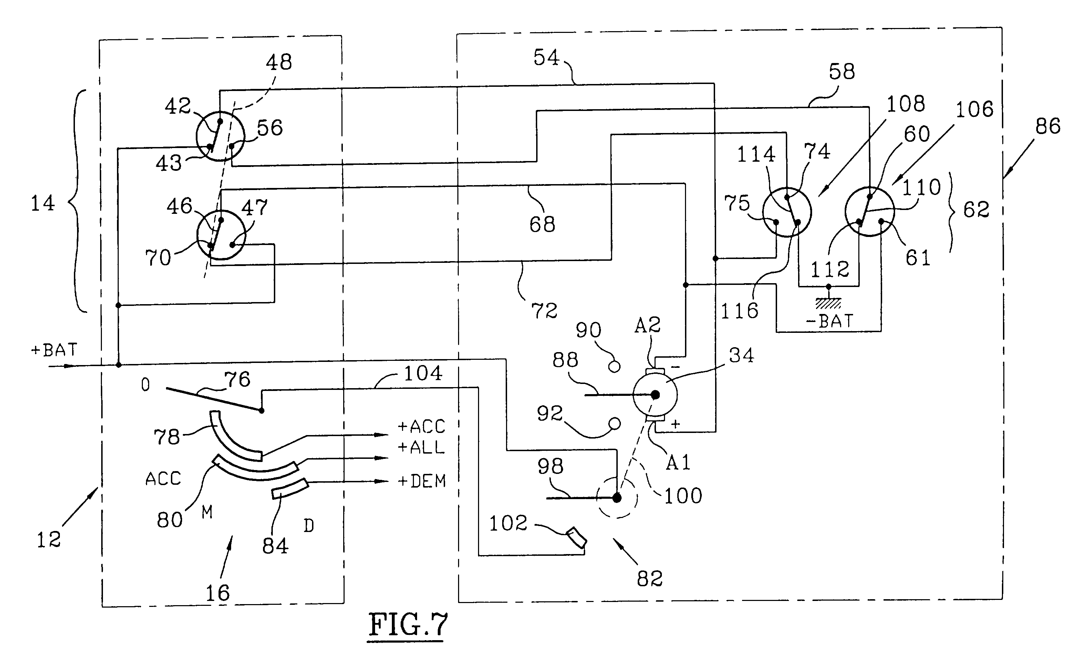

Dès que le moteur 34 quitte sa position de déverrouillage, et comme cela est illustré sur la figure 7, le dispositif d'inhibition 82 interrompt immédiatement la liaison électrique entre le contact mobile de commande 76 et la polarité +BAT.

Le début de cette rotation provoque également le changement d'état immédiat de l'interrupteur de détection du déverrouillage 106.

La rotation du moteur 34 se poursuit dans le sens horaire jusqu'à ce qu'il atteigne à nouveau sa position verrouillée illustrée à la figure 2, la fin de cette rotation provoquant à nouveau le changement d'état de l'interrupteur de détection du verrouillage 108 dont le contact mobile 114 quitte le contact fixe 116 pour occuper sa position de repos illustrée sur la figure 2 dans laquelle il coopère avec le contact fixe 75.

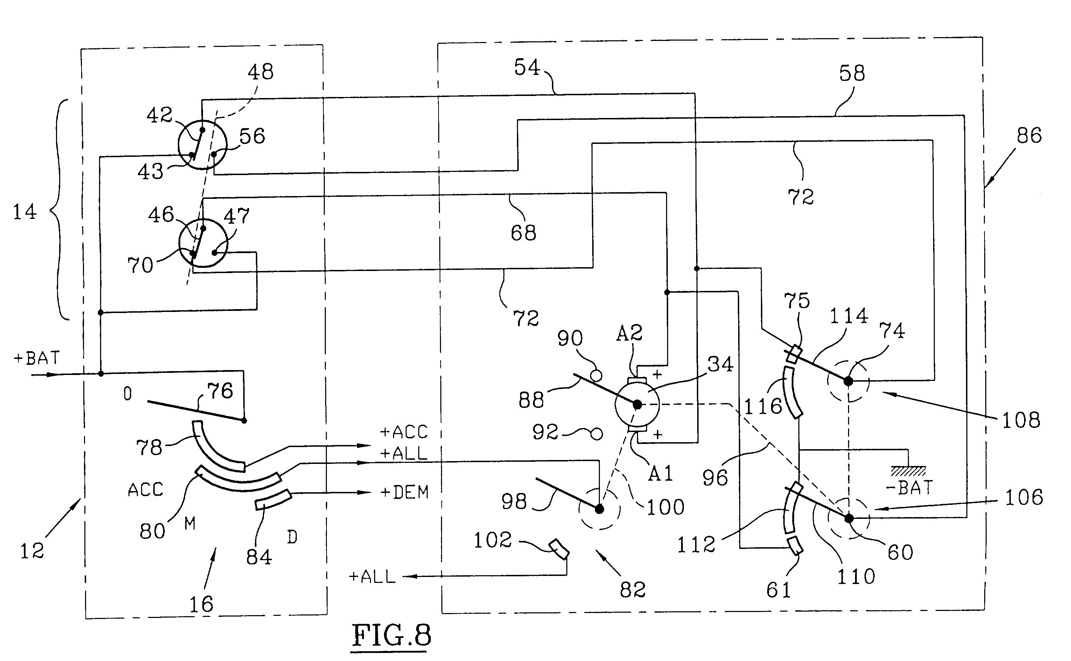

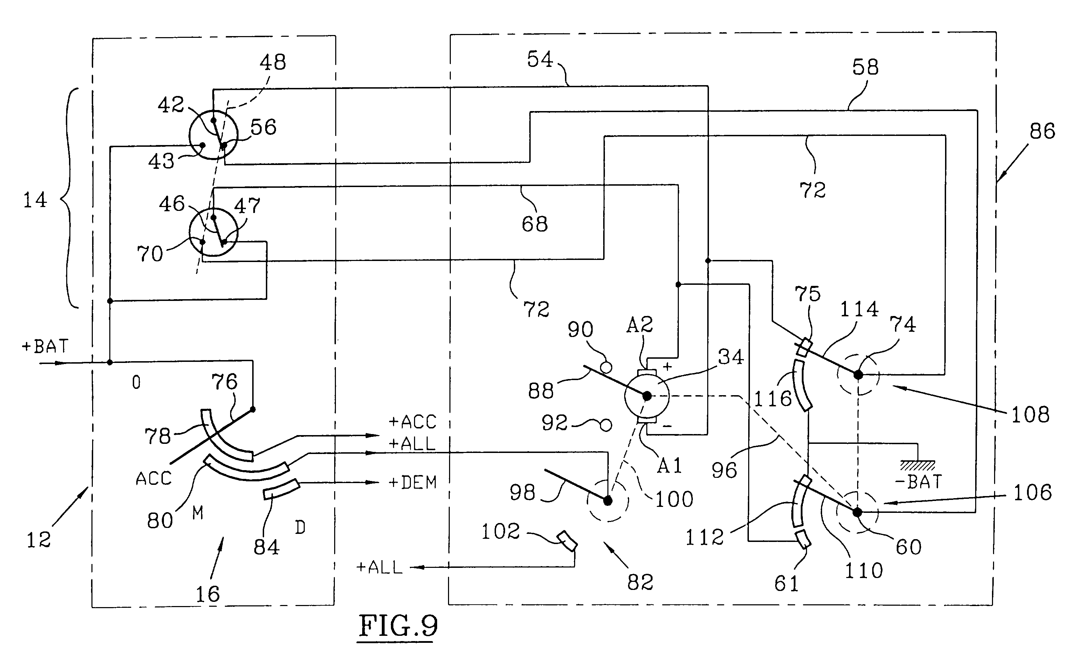

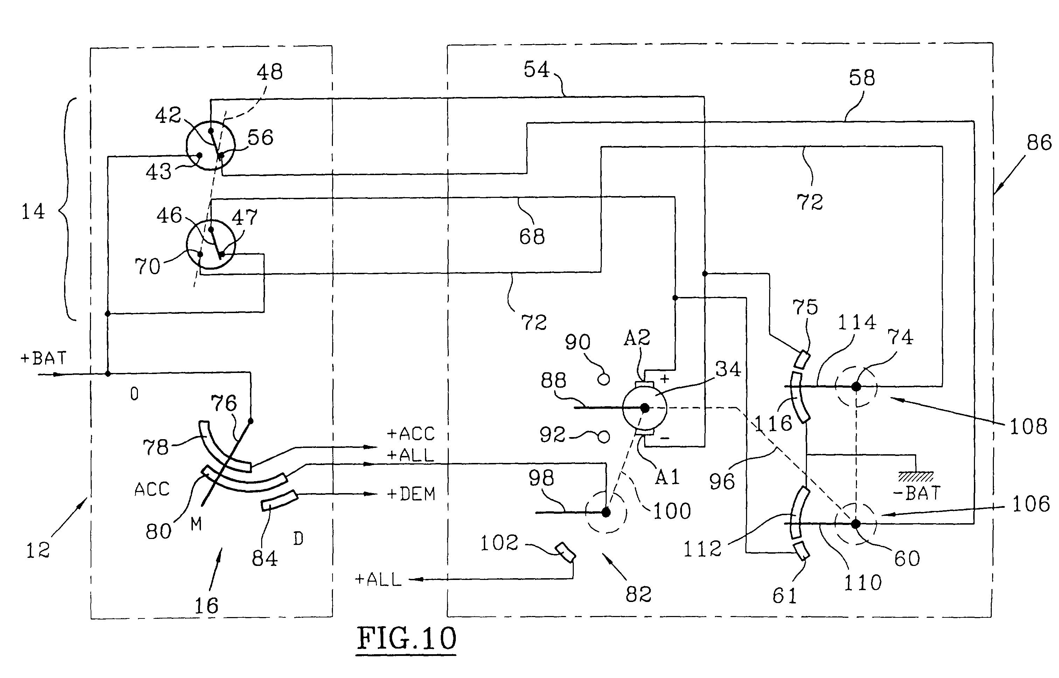

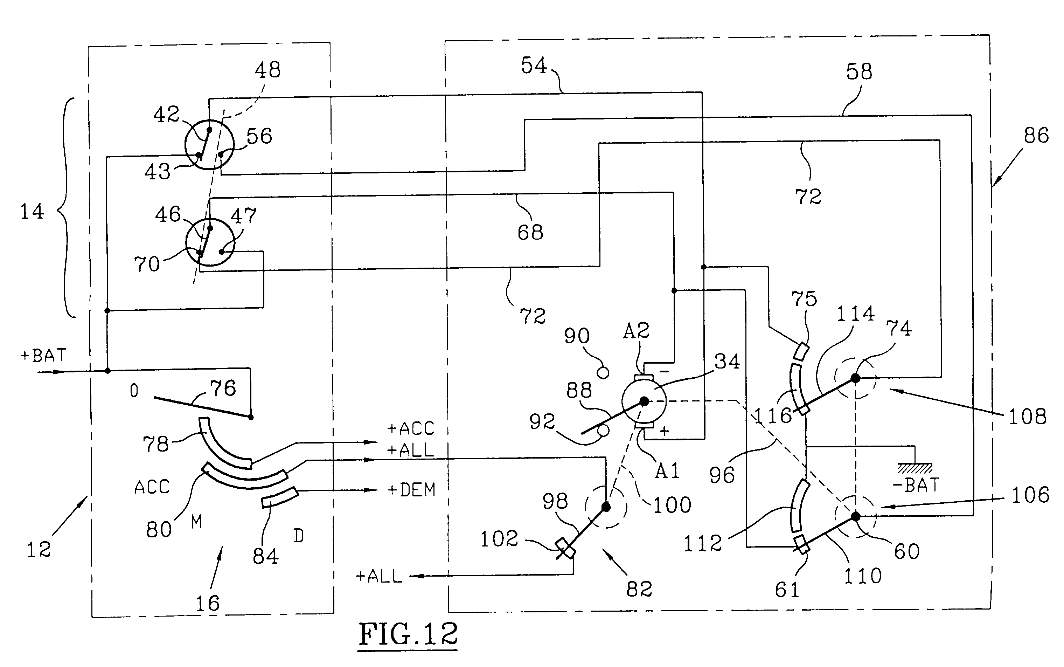

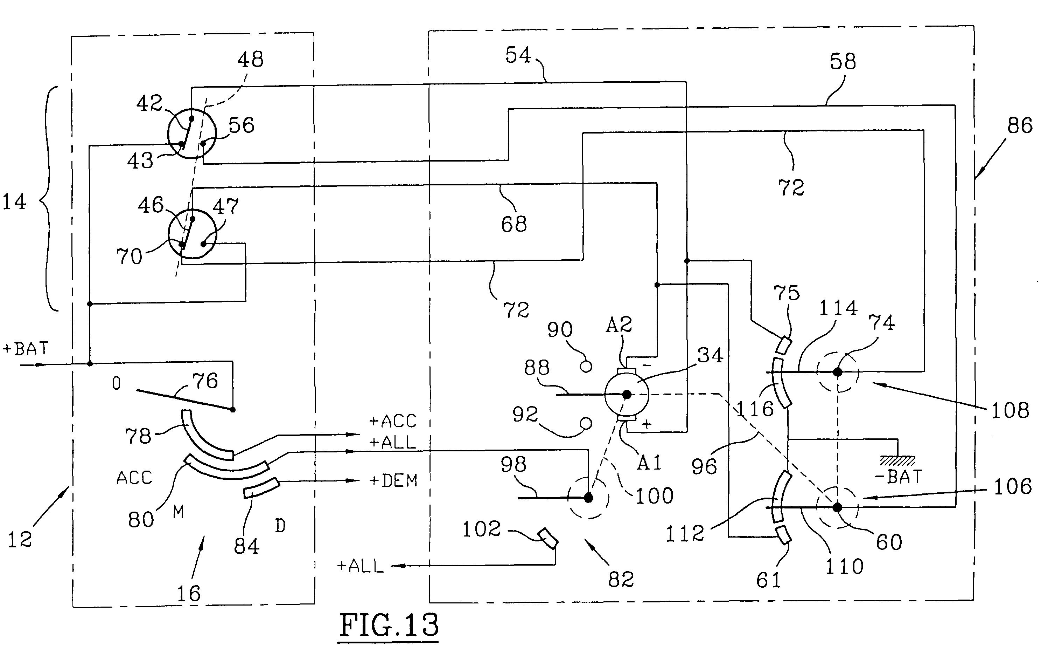

On décrira maintenant le second mode de réalisation illustré aux figures 8 à 13 sur lesquelles des composants identiques ou similaires à ceux illustrés aux figures 2 à 7 sont désignés par les mêmes chiffres de référence.

Comme on peut le constater en considérant la partie de gauche des figures 8 à 13, l'interrupteur à positions multiples de commande 16 est d'une conception légèrement différente de celle décrite précédemment, dans la mesure où le contact mobile 76 est relié en permanence à la polarité +BAT de la batterie du véhicule.

Dans ce second mode de réalisation, c'est la piste 80 qui est reliée au circuit d'allumage +ALL du moteur du véhicule à travers le dispositif d'inhibition 82 qui, du point de vue électrique, est ici situé en aval du commutateur à positions multiples 16.

Le plot fixe 102 est relié au circuit électrique +ALL d'allumage du véhicule, ce dernier circuit n'étant ainsi relié à la première polarité +BAT que lorsque l'antivol est en position déverrouillée, sa liaison étant assurée par l'intermédiaire du contact mobile de commande 76, de la piste conductrice 80, du contact mobile d'inhibition 98 et du plot fixe 102.

Les moyens 62 de détection de l'état de l'antivol illustré dans ce second mode de réalisation sont d'une conception générale similaire à ceux qui ont été décrits en référence au premier mode de réalisation des figures 2 à 7.

Toutefois, les plots ou contacts fixes 75, 116 et 61, 112 sont constitués par des pistes électriques conductrices agencées par paires en arc de cercle dans le prolongement l'une de l'autre.

Chacun des contacts mobiles 110 et 114 des interrupteurs de détection du déverrouillage 106 et du verrouillage 108 sont des contacts mobiles rotatifs qui sont liés en rotation tous les deux simultanément à l'arbre du moteur 34 par une liaison mécanique schématisée par la ligne en traits pointillés 96 sur les figures.

Le fonctionnement du second mode de réalisation est en tout point équivalent à celui qui a été décrit en référence au premier mode de réalisation illustré aux figures 2 à 7.

Le fonctionnement des interrupteurs 106 et 108 de détection du déverrouillage et du verrouillage de l'antivol est notamment parfaitement identique.

Seule la présence du dispositif d'inhibition 82 en aval du commutateur rotatif à positions multiples 16 provoque des différences dans les conséquences de la manipulation de ce commutateur par le conducteur.

En effet, lorsque le moteur 34 est en train de provoquer le changement d'état de l'antivol dans sa position de verrouillage vers sa position de déverrouillage de l'antivol, l'utilisateur peut simultanément provoquer la rotation du contact mobile de commande 76 pour l'amener en contact avec la piste conductrice 78 et provoquer l'alimentation des accessoires électriques du véhicule.

Si l'utilisateur continue d'entraîner en rotation le contact mobile 76, et qu'il l'amène en contact avec la piste 80, il ne se produit aucune alimentation du circuit d'allumage +ALL car le contact mobile d'inhition 98 est dans sa position de repos dans laquelle il interrompt l'alimentation du circuit +ALL.

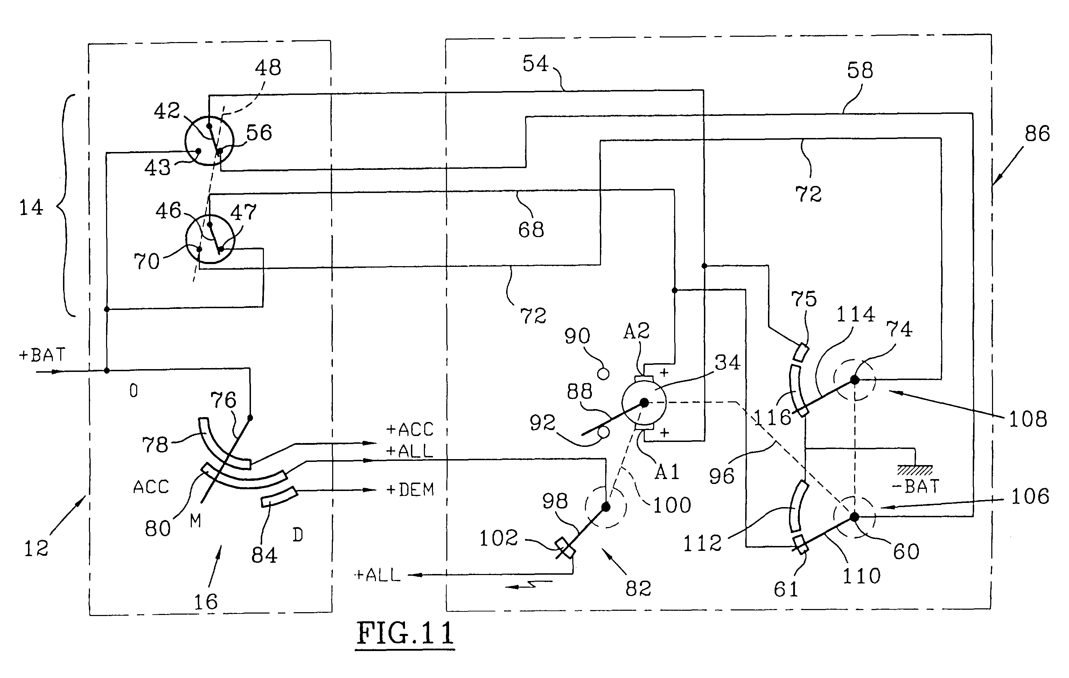

Par contre, dès que le moteur 34 atteint sa position de déverrouillage illustrée à la figure 11, on constate que le contact mobile d'inhibition 98 est en contact avec le plot fixe 102 et que le circuit +ALL d'allumage du moteur est relié à la piste conductrice 80 de l'interrupteur de commande à positions multiples 16.

Ainsi, si l'utilisateur amène le contact mobile de commande 76 dans la position M, il alimente le circuit d'allumage +ALL et s'il l'amène dans la position D, il alimente simultanément le circuit d'allumage +ALL et le circuit d'alimentation électrique +DEM du démarreur du véhicule pouvant ainsi provoquer le démarrage du moteur à combustion du véhicule en ayant la certitude que l'antivol du véhicule a préalablement été déverrouillé.

Après avoir fait démarrer le moteur, le contact mobile de commande 76 reste dans la position M correspondant à la marche du moteur.

Dans les différents exemples de réalisation décrits ci-dessus les polarités de la batterie +BAT et -BAT peuvent être inversées tout en conservant un mode de fonctionnement identique.

En inversant lesdites polarités, le moteur 34, en position verrouillée ou déverrouillée, est en court-circuit au potentiel -BAT ce qui accroît encore la sécurité de fonctionnement : une mise à la masse accidentelle d'un élément du système d'antivol ne peut provoquer un verrouillage intempestif.

## Revendications

1. Système d'antivol électrique, pour un véhicule automobile, du type comportant :
- un commutateur d'antivol (12) pour la commande du démarrage (+DEM) du moteur du véhicule et de l'alimentation de différents circuits électriques du véhicule (+ACC, +ALL);
- un antivol motorisé comportant un moteur électrique (34) d'entraînement d'un organe de blocage (36) entre une position verrouillée et une position déverrouillée, par inversion des polarités des bornes (A1, A2) d'alimentation du moteur électrique (34)
- et du type dans lequel le commutateur d'antivol (12) comporte :
- un interrupteur de clef (14) pour détecter la simulation de l'introduction d'une clef (10) dans le commutateur d'antivol (12); et
- un interrupteur de commande (16) à positions multiples pour commander en séquence l'alimentation de plusieurs circuits électriques du véhicule et du démarreur (+DEM), comportant un contact mobile de commande (76) relié à une polarité (+BAT) d'une source d'alimentation électrique, et une série de contacts fixes (78, 80, 84) avec lesquels le contact mobile de commande (76) entre successivement en contact lors de la manoeuvre du commutateur (12) en vue de provoquer le démarrage du véhicule, caractérisé en ce que le moteur électrique (34) de l'antivol motorisé comporte :
- une première borne d'alimentation (A1) qui est reliée à une première polarité (+BAT) de la source d'alimentation à travers l'interrupteur de clef (14) et en l'absence de clef, ou qui est reliée à la seconde polarité (-BAT) de la source d'alimentation à travers l'interrupteur de clef (14), en présence de clef, et à travers des moyens (62) de détection de l'état de l'antivol, lorsque l'antivol n'est pas en position déverrouillée ;
- et une seconde borne d'alimentation (A2) qui est reliée à la première polarité (+BAT) de la source d'alimentation à travers l'interrupteur de clef (14) et en présence de clef, ou en l'absence de clef et à travers lesdits moyens (62) de détection de l'état de l'antivol lorsque l'antivol est en position verrouillée, ou qui est reliée à la seconde polarité (-BAT) de la source d'alimentation à travers l'interrupteur de clef (14), en l'absence de clef, et à travers lesdits moyens (62) de détection de l'état de l'antivol lorsque l'antivol n'est pas en position verrouillée.

2. Système d'antivol électrique selon la revendication 1, caractérisé en ce que l'interrupteur de clef (14) comporte une paire (42, 46) de contacts mobiles montés mobiles simultanément entre une première position correspondante à l'absence de clef et une seconde position correspondant à la présence de clef, parmi lesquels :
- un premier contact mobile (42) est relié à la première borne (A1) d'alimentation du moteur (34) et est susceptible de coopérer, en l'absence de clef, avec un contact fixe (43) relié en permanence à la première polarité (+BAT) de la source d'alimentation et, en présence de clef, est susceptible de coopérer avec un premier plot (60) de sortie des moyens (62) de détection de l'état de l'antivol qui est relié à la seconde polarité (-BAT) de la source d'alimentation lorsque l'antivol n'est pas en position déverrouillée ; et
- un second contact mobile (46) est relié à la seconde borne (A2) d'alimentation du moteur (34) et est susceptible de coopérer, en présence de clef, avec un contact fixe (70) relié en permanence à la première polarité (+BAT) de la source d'alimentation et, en l'absence de clef, est susceptible de coopérer avec un second plot (74) de sortie des moyens (62) de détection de l'état de l'antivol qui est relié à la seconde polarité (-BAT) de la source d'alimentation lorsque l'antivol n'est pas en position verrouillée.

3. Système d'antivol électrique selon la revendication 2, caractérisé en ce que les moyens de détection (62) de l'état de l'antivol comportent :
- un interrupteur (106) de détection du déverrouillage de l'antivol qui comporte un contact mobile (110) relié au premier plot de sortie (60) et qui est susceptible de coopérer avec un premier contact fixe (112) relié à la seconde polarité (-BAT) de la source d'alimentation lorsque l'antivol n'est pas en position déverrouillée, et est susceptible de coopérer avec un contact fixe (61) relié à la seconde borne (A2) d'alimentation du moteur (34) lorsque l'antivol est en position déverrouillée ;
- et un interrupteur (108) de détection du déverrouillage de l'antivol qui comporte un contact mobile (114) relié audit second plot de sortie (74) et qui est susceptible de coopérer avec un premier contact fixe (116) relié à la seconde polarité (-BAT) de la source d'alimentation lorsque l'antivol n'est pas en position verrouillée, et qui est susceptible de coopérer avec un second contact fixe (75) relié à la première borne (A1) d'alimentation du moteur (34) lorsque l'antivol est en position verrouillée.

4. Système d'antivol électrique selon la revendication 3, caractérisé en ce que les premiers contacts fixes (112, 116) des interrupteurs de détection du déverrouillage (106) et du verrouillage (108) de l'antivol sont des pistes conductrices, et en ce que les contacts mobiles associés (110, 114) des moyens (62) de détection de l'état de l'antivol sont liés en rotation à l'arbre de sortie du moteur (34) de l'antivol.

5. Système d'antivol électrique selon l'une quelconque des revendications précédentes, caractérisé en ce que l'un au moins (80) des contacts fixes de l'interrupteur de commande à positions multiples (16) du commutateur d'antivol (12) est relié au circuit électrique associé (+ALL) du véhicule par un dispositif d'inhibition (82) qui n'établit l'alimentation électrique de ce circuit que lorsque l'antivol est en position déverrouillée.

6. Système d'antivol électrique selon la revendication 5, caractérisé en ce que le dispositif d'inhibition est un interrupteur d'inhibition dont le contact mobile (98) est relié audit contact fixe (80) de l'interrupteur de commande (16) et coopère avec un plot fixe (102) relié audit circuit électrique (+ALL) lorsque l'antivol est en position déverrouillée.

7. Système d'antivol électrique selon l'une quelconque des revendications 1 à 4, caractérisé en ce que le contact mobile de commande (76) de l'interrupteur de commande à positions multiples (16) du commutateur d'antivol (12) est relié à une polarité (+BAT) de la source d'alimentation par un dispositif d'inhibition (82) qui n'établit la liaison électrique que lorsque l'antivol est en position déverrouillée.

8. Système d'antivol électrique selon la revendication 7, caractérisé en ce que le dispositif d'inhibition (82) est un interrupteur d'inhibition dont le contact mobile (98) est relié à une polarité (+BAT) de la source d'alimentation et coopère avec un plot fixe (102) relié au contact mobile de commande (76) lorsque l'antivol est en position déverrouillée.

9. Système d'antivol électrique selon l'une des revendications 6 ou 8, caractérisé en ce que le contact mobile (98) de l'interrupteur d'inhibition est lié en rotation au moteur (34) de l'antivol motorisé.

10. Système d'antivol électrique selon l'une quelconque des revendications précédentes, caractérisé en ce que le commutateur d'antivol (12) est un commutateur rotatif.

## Patentansprüche

1. Elektrisches Diebstahlschutzsystem für ein Kraftfahrzeug, welches
- einen Diebstahlschutzschalter (12) zur Betätigung des Startens (+DEM) des Motors des Fahrzeugs und zur Versorgung der unterschiedlichen elektrischen Stromkreise des Fahrzeugs (+ACC, +ALL) und
- eine motorbetätigte Diebstahlschutzeinrichtung mit einem Elektromotor (34) für den Antrieb eines Sperrelements (36) zwischen einer verriegelten Stellung und einer entriegelten Stellung durch Umkehr der Polaritäten an den Anschlußklemmen (A1, A2) des Elektromotors (34) enthält;
- wobei der Diebstahlschutzschalter (12)
- einen Schlüsselschalter (14), zum Erkennen der Simulation des Einsteckens eines Schlüssels (10) in den Diebstahlschutzschalter (12) und
- einen Mehrstellungssteuerschalter (16) für die sequentielle Steuerung der Versorgung mehrerer Stromkreise des Fahrzeugs und des Starters (+DEM) umfaßt, wobei der Mehrstellungssteuerungsschalter einen beweglichen Schaltkontakt (76), der mit einer Polarität (+BAT) einer Stromquelle verbunden ist, und eine Reihe von feststehenden Kontakten (78, 80, 84) enthält, mit denen der bewegliche Schaltkontakt (76) bei einer Betätigung des Schalters (12) nacheinander in Berührung kommt, um das Fahrzeug zu starten, dadurch gekennzeichnet, daß der Elektromotor (34) der motorbetätigten Diebstahlschutzeinrichtung folgendes umfaßt:
- eine erste Anschlußklemme (A1), die mit einer ersten Polarität (+BAT) der Stromquelle über den Schlüsselschalter (14) verbunden ist, wenn kein Schlüssel vorhanden ist, oder die mit der zweiten Polarität (-BAT) der Stromquelle über den Schlüsselschalter (14) und über Elemente (62) zur Erkennung des Zustands des Diebstahlschutzes verbunden ist, wenn ein Schlüssel vorhanden ist und sich die Diebstahlschutzeinrichtung nicht in der entriegelten Stellung befindet;
- und eine zweite Anschlußklemme (A2), die mit der ersten Polarität (+BAT) der Stromquelle über den Schlüsselschalter (14) verbunden ist, wenn ein Schlüssel vorhanden ist oder die über den Schlüsselschalter und die genannten Elemente (62) zur Erkennung des Zustands des Diebstahlschutzes mit der ersten Polarität der Stromquelle verbunden ist, wenn kein Schlüssel vorhanden ist und sich die Diebstahlschutzeinrichtung in der verriegelten Stellung befindet, oder die mit der zweiten Polarität (-BAT) der Stromquelle über den Schlüsselschalter (14) und die genannten Elemente zur Erkennung des Zustands des Diebstahlschutzes verbunden ist, wenn kein Schlüssel vorhanden ist und wenn sich die Diebstahlschutzeinrichtung nicht in der verriegelten Stellung befindet.

2. Elektrisches Diebstahlschutzsystem nach Anspruch 1, dadurch gekennzeichnet, daß der Schlüsselschalter (14) ein Paar (42,46) beweglicher Kontakte umfaßt, die gleichzeitig zwischen einer ersten Stellung, die dem Fehlen eines Schlüssels entspricht, und einer zweiten Stellung, die dem Vorliegen eines Schlüssels entspricht, beweglich angeordnet sind; von denen:
- ein erster beweglicher Kontakt (42) mit der ersten Anschlußklemme (A1) des Motors (34) verbunden ist, der bei Abwesenheit des Schlüssels in der Lage ist, mit einem feststehenden Kontakt (43) zusammenzuwirken, welcher ständig mit der ersten Polarität (+BAT) der Stromquelle in Verbindung steht, und der bei Anwesenheit des Schlüssels in der Lage ist, mit einer ersten Ausgangsbuchse (60) der Elemente (62) zur Erkennung des Zustands des Diebstahlschutzes zusammenwirken, welche mit der zweiten Polarität (-BAT) der Stromquelle verbunden ist, wenn sich die Diebstahlschutzeinrichtung nicht in der entriegelten Stellung befindet;
- ein zweiter beweglicher Kontakt (46) mit der zweiten Anschlußklemme (A2) des Motors (34) verbunden ist, der bei Anwesenheit des Schlüssels in der Lage ist, mit einem feststehenden Kontakt (70) zusammenzuwirken, der ständig mit der ersten Polarität (+BAT) der Stromquelle in Verbindung steht, und der bei Abwesenheit des Schlüssels in der Lage ist, mit einer zweiten Ausgangsbuchse (74) der Elemente (62) zur Erkennung des Zustands des Diebstahlschutzes zusammenzuwirken, welche mit der zweiten Polarität (-BAT) der Stromquelle verbunden ist, wenn sich die Diebstahlschutzeinrichtung nicht in der verriegelten Stellung befindet.

3. Elektrisches Diebstahlschutzsystem nach Anspruch 2, dadurch gekennzeichnet, daß die Elemente (62) zur Erkennung des Zustands der Diebstahlschutzeinrichtung
- einen Schalter (106) zur Erkennung der Entriegelung der Diebstahlschutzeinrichtung enthalten, der einen beweglichen Kontakt (110) aufweist, welcher mit der ersten Ausgangsbuchse (60) verbunden und der in der Lage ist, mit einem ersten feststehenden Kontakt (112) zusammenzuwirken, welcher mit der zweiten Polarität (-BAT) der Stromquelle in Verbindung steht, wenn sich die Diebstahlschutzeinrichtung nicht in der entriegelten Stellung befindet, und der in der Lage ist, mit einem feststehenden Kontakt (61) zusammenzuwirken, der mit der zweiten Anschlußklemme (A2) des Motors (34) verbunden ist, wenn sich die Diebstahlschutzeinrichtung in der entriegelten Stellung befindet;
- und einen Schalter (108) zur Erkennung der Entriegelung der Diebstahlschutzeinrichtung enthalten, der einen beweglichen Kontakt (114) aufweist, der mit der genannten zweiten Ausgangsbuchse (74) verbunden und der in der Lage ist, mit einem ersten feststehenden Kontakt (116) zusammenzuwirken, der mit der zweiten Polarität (-BAT) der Stromquelle in Verbindung steht, wenn sich die Diebstahlschutzeinrichtung nicht in der verriegelten Stellung befindet, und der in der Lage ist, mit einem zweiten feststehenden Kontakt (75) zusammenzuwirken, der mit der ersten Anschlußklemme (A1) des Motors (34) verbunden ist, wenn sich die Diebstahlschutzeinrichtung in der verriegelten Stellung befindet.

4. Elektrisches Diebstahlschutzsystem nach Anspruch 3, dadurch gekennzeichnet, daß es sich bei den ersten feststehenden Kontakten (112, 116) der Schalter (106, 108) zur Erkennung der Entriegelung und Verriegelung der Diebstahlschutzeinrichtung um Leiterbahnen handelt, und daß die zugehörigen beweglichen Kontakte (110, 114) der Elemente (62) zur Erkennung des Zustandes der Diebstahlschutzeinrichtung drehbar mit der Abtriebswelle des Motors (34) der Diebstahlschutzeinrichtung verbunden sind.

5. Elektrisches Diebstahlschutzsystem nach einem der vorhergehenden Ansprüche, dadurch gekennzeichnet, daß mindestens einer der feststehenden Kontakte (80) des Mehrstellungssteuerschalters (16) des Diebstahlschutzschalters (12) mit dem zugehörigen Stromkreis (+ALL) des Fahrzeugs über eine Sperrvorrichtung (82) verbunden ist, welche die Stromversorgung dieses Kreises nur dann einschaltet, wenn sich die Diebstahlschutzeinrichtung in der entriegelten Stellung befindet.

6. Elektrisches Diebstahlschutzsystem nach Anspruch 5, dadurch gekennzeichnet, daß es sich bei der Sperrvorrichtung um einen Sperrschalter handelt, dessen beweglicher Kontakt (98) mit dem genannten feststehenden Kontakt (80) des Steuerschalters (16) verbunden ist, und der mit einem feststehenden Kontakt (102) zusammenwirkt, welcher mit dem genannten Stromkreis (+ALL) verbunden ist, wenn sich die Diebstahlschutzeinrichtung in der entriegelten Stellung befindet.

7. Elektrisches Diebstahlschutzsystem nach einem der Ansprüche 1 bis 4, dadurch gekennzeichnet, daß der bewegliche Steuerkontakt (76) des Mehrstellungssteuerschalters (16) des Diebstahlschutzschalters (12) mit einer Polarität (+BAT) der Stromquelle über eine Sperrvorrichtung (82) verbunden ist, welche die elektrische Verbindung nur dann herstellt, wenn sich die Diebstahlschutzeinrichtung in der entriegelten Stellung befindet.

8. Elektrisches Diebstahlschutzsystem nach Anspruch 7, dadurch gekennzeichnet, daß es sich bei der Sperrvorrichtung (82) um einen Sperrschalter handelt, dessen beweglicher Kontakt (98) mit der Polarität (+BAT) der Stromquelle verbunden ist und der mit einem feststehenden Kontakt (102) zusammenwirkt, der mit dem beweglichen Steuerkontakt (76) verbunden ist, wenn sich der Diebstahlschutz in der entriegelten Stellung befindet.

9. Elektrisches Diebstahlschutzsystem nach einem der Ansprüche 6 oder 8 , dadurch gekennzeichnet, daß der bewegliche Kontakt (98) des Sperrschalters durch den Motor (34) des motorbetätigten Diebstahlschutzes drehbar mit diesem verbunden ist.

10. Elektrisches Diebstahlschutzsystem nach einem der hervorgehenden Ansprüche, dadurch gekennzeichnet, daß es sich bei dem Diebstahlschutzschalter (12) um einen Drehschalter handelt.

## Claims

1. An electrical anti-theft system for a motor vehicle, of the type comprising:
- an anti-theft switch (12) for controlling starting (+DEM) of the engine of the vehicle and the supply of power to various electrical circuits of the vehicle (+ACC, +ALL) ;
- a motorised anti-theft device comprising an electric motor (34) for driving a stop member (36) between a locked position and an unlocked position, by inversion of the polarities of the power supply terminals (A1, A2) of the electric motor (34);
- and of the type in which the anti-theft switch (12) comprises:
- a key interruptor (14) for detecting simulated introduction of a key (10) into the anti-theft switch (12); and
- a multi-position control interruptor (16) for controlling in sequence the supply of power to a plurality of electrical circuits of the vehicle and the starter circuit (+DEM), comprising a movable control contact (76) connected to one polarity (+BAT) of a source of electrical power, and a series of fixed contacts (76, 80, 84) with which the movable control contact (76) enters into successive contact during operation of the anti-theft switch (12), for the purpose of causing the vehicle to start, characterised in that the electric motor (34) of the motorised anti-theft device comprises:
- a first power supply terminal (A1) which is connected to a first polarity (+BAT) of the power supply source through the key interruptor (14) in the absence of any key, or which is connected to the second polarity (-BAT) of the power supply source through the key interruptor (14) in the presence of a key, and through means (62) for detecting the state of the anti-theft device when the anti-theft device is not in its unlocked position;
- and a second power supply terminal (A2) which is connected to the first polarity (+BAT) of the power supply source through the key interruptor (14) in the presence of a key, or, in the absence of a key, through the said means (G2) for detecting the state of the anti-theft device when the anti-theft device is in its locked position, or which is connected to the second polarity (-BAT) of the power supply source through the key interruptor (14) in the absence of a key, and through the said means (62) for detecting the state of the anti-theft device when the anti-theft device is not in its locked position.

2. An electrical anti-theft system according to Claim 1, characterised in that the key interruptor (14) comprises a pair of movable contacts (42, 46) which are mounted for simultaneous movement between a first position corresponding to the absence of a key and a second position corresponding to the presence of a key, among which are the following:
- a first movable contact (42) is connected to the first power supply terminal (A1) for the motor (34) and is arranged to cooperate, in the absence of any key, with a fixed contact (43) which is permanently connected to the first polarity (+BAT) of the power supply source, and is arranged to cooperate, in the presence of a key, with a first output contact (60) of the means (62) for detecting the state of the anti-theft device which is connected to the second polarity (-BAT) of the power supply source when the anti-theft device is not in its unlocked position; and
- a second movable contact (46) is connected to the second power supply terminal (A2) of the motor (34) and is adapted to cooperate, in the presence of a key, with a fixed contact (70) which is permanently connected to the first polarity (+BAT) of the power supply source, and, in the absence of any key, is arranged to cooperate with a second output contact (74) of the means (62) for detecting the state of the anti-theft device, which is connected to the second polarity (-BAT) of the power supply source when the anti-theft device is not in its locked position.

3. An electrical anti-theft system according to Claim 2, characterised in that the means (62) for detecting the state of the anti-theft device comprise:
- an interrupter (106) for detecting unlocking of the anti-theft device, which comprises a movable contact (110) connected to the first output contact (60), and which is arranged to cooperate with a first fixed contact (112) connected to the second polarity (-BAT) of the power supply source when the anti-theft device is not in its unlocked position, and is arranged to cooperate with a fixed contact (61) connected to the second power supply terminal (A2) of the motor (34) when the anti-theft device is in its unlocked position;
- and an interruptor (108) for detecting locking of the anti-theft device, which comprises a movable contact (114) connected to the said second output contact (74) and adapted to cooperate with a first fixed contact (116) connected to the second polarity (-BAT) of the power supply source when the anti-theft device is not in its locked position, the movable contact being arranged to cooperate with a second fixed contact (75) connected to the first power supply terminal (A1) of the motor (34) when the anti-theft device is in its locked position.

4. An electrical anti-theft system according to Claim 3, characterised in that the first fixed contacts (112, 116) of the unlocked-position detecting interruptor (106) and the locked-position detecting interruptor (108) of the anti-theft device are conductive tracks, and in that the associated movable contacts (110, 114) of the means (62) for detecting the state of the anti-theft device are coupled in rotation to the output shaft of the motor (34) of the anti-theft device.

5. An electrical anti-theft system according to any one of the preceding Claims, characterised in that at least one (80) of the fixed contacts of the multi-position control interruptor (16) of the anti-theft switch (12) is connected to the associated electrical circuit (+ALL) of the vehicle through an inhibiting device (82) which establishes the electrical power supply to this circuit only when the anti-theft device is in its unlocked position.

6. An electrical anti-theft system according to Claim 5, characterised in that the inhibiting device is an inhibiting interruptor, the movable contact (98) of which is connected to the said fixed contact (80) of the control interruptor (16) and cooperates with a fixed contact element (102) which is connected to the said electrical circuit (+ALL) when the anti-theft device is in its unlocked position.

7. An electrical anti-theft system according to any one of Claims 1 to 4, characterised in that the movable control contact (76) of the multi-position control interruptor (16) of the anti-theft switch (12) is connected to one polarity (+BAT) of the power supply source through an inhibiting device (82) which makes the electrical connection only when the anti-theft device is in its unlocked position.

8. An electrical anti-theft system according to Claim 7, characterised in that the inhibiting device (82) is an inhibiting interruptor, the movable contact (98) of which is connected to one polarity (+BAT) of the power supply source and cooperates with a fixed contact element (102), which is connected to the movable control contact (76) when the anti-theft device is in its unlocked position.

9. An electrical anti-theft system according to Claim 6 or Claim 8, characterised in that the movable contact (98) of the inhibiting interruptor is coupled in rotation to the motor (34) of the motorised anti-theft unit.

10. An electrical anti-theft system according to any one of the preceding Claims, characterised in that the anti-theft switch (12) is a rotary switch.
